# EUROPEAN PATENT APPLICATION

(11) **EP 1 528 613 A1**
(43) Date of publication of application: **04.05.2005**
(21) Application number: 04025548.1
(22) Date of filing: 27.10.2004
(51) Int. Cl.: H01M 4/86, H01M 4/88, B22F 3/11, G01N 27/407

(54) **Functional porous film, porous metal film and methods of manufacturing such films**

(30) Priority: 28.10.2003 JP 2003367759; 28.10.2003 JP 2003367760
(71) Applicant: TDK Corporation, Tokyo 103-8272 (JP)
(72) Inventor: Ono, Shizuko, Tokyo 103-8272 (JP); Egashira, Makoto, Nagasaki-shi Nagasaki 852-8065 (JP); Shimizu, Yasuhiro, Nishisonogi-gun Nagasaki 851-2126 (JP); Hyodo, Takeo, Nagasaki-shi Nagasaki 852-8022 (JP)
(74) Representative: Müller - Hoffmann & Partner

(57) **Abstract**

Provided are a functional porous film having a plurality of functions, a method of manufacturing the same, and a sensor using the same. In the functional porous film, a functional portion having a different function from a porous body is disposed on the inner wall of a pore of the porous body. The functional porous film is formed through forming a precursor film including a pore-forming powder such as an organic powder on which a material powder of the functional portion is deposited and a material powder of the porous body, and then heating the precursor film to remove the pore-forming powder and sinter the material powder of the porous body.

## Description

### BACKGROUND OF THE INVENTION

### 1. Field of the Invention

The present invention relates to a functional porous film which can be suitably used for various sensors such as a carbon dioxide sensor, a hydrogen sensor and a nitrogen oxide sensor, a method of manufacturing the functional porous film, a sensor using the functional porous film, a method of manufacturing a porous metal film, and a method of manufacturing a sensor using the porous metal film.

### 2. Description of the Related Art

In recent years, porous metal films are used in various technical fields such as sensors. As the porous metal films, for example, a mesh porous metal film and a porous metal film formed through sintering a metal powder are known. As a method of forming a porous metal film through sintering a metal powder, for example, a method in which a metal powder is dispersed in an organic mediu, such as ethylene glycol to form slurry, and a coating of the slurry is applied, then the coating is sintered to form a porous metal film is generally known (for example, refer to Japanese Unexamined Patent Application Publication No. Hei 11-271270). Moreover, a method in which after a metal powder, a binder and an activator are mixed, the mixture is foamed by heating is also known (for example, refer to Japanese Unexamined Patent Application Publication No. 2003-155503). Further, a method in which a polymer particle is used as a core material, and a metal film is formed on the surface of the polymer particle through electroless plating, and then by heating, the metal film is sintered, and the core material is removed is known (for example, Japanese Unexamined Patent Application Publication No. Hei 6-240304).

Moreover, porous ceramic films are often used, and a method in which an organic material powder such as starch or cellulose is dispersed in a ceramic material powder to form a pore is known (for example, refer to Japanese Unexamined Patent Application Publication No. Hei 5-97537). Further, a method in which after slurry in which a monomer material is mixed with a ceramic material powder is gelatinized and molded, the slurry is sintered is known (for example, refer to Japanese Unexamined Patent Application Publication No. 2001-261463). Recently, a method of using a spherical organic body has been proposed (for example, refer to Japanese Unexamined Patent Application Publication No. Hei 5-17256 or T. Hyodo et al., Preparation and application of macroporous tin dioxide thick films by utilizing PMMA microspheres as a template, "Preprints of Annual Meeting of The Ceramic Society of Japan, 2003," The Ceramic Society of Japan, March 22, 2003, p.28).

However, recently, downsizing and performance enhancement of devices have been more strongly required, and, for example, the development of porous films having a plurality of functions has been considered accordingly.

Moreover, it is difficult to form a porous metal film with a uniform porosity, a uniform pore size or a uniform pore shape, and, for example, in the method of plating a metal on the core material described in Japanese Unexamined Patent Application Publication No. Hei 6-240304, there are problems that procedures are complicated, and the porous metal film cannot obtain sufficient characteristics such as conductivity required when the porous metal film is used as an electrode.

### SUMMARY OF THE INVENTION

In view of the foregoing, it is a first object of the invention to provide a functional porous film having a plurality of functions, a method of manufacturing the functional porous film, and a sensor using the functional porous film.

It is a second object of the invention to provide a method of manufacturing a porous metal film capable of easily controlling its porosity, its pore size or its pore shape, and a method of manufacturing a sensor using the porous metal film.

A functional porous film according to the invention comprises: a porous body having a pore; and a functional portion being disposed in the pore and having a different function from the porous body.

In the functional porous film, the porous body preferably has a structure in which a plurality of particles are connected to one another, and the functional portion is preferably dispersed in particle form.

A sensor according to the invention comprises: a functional porous film comprising a functional portion being disposed in a pore of a porous body and having a different function from the porous body.

A method of manufacturing a functional porous film according to the invention comprises the steps of: forming a precursor film including a pore-forming powder on which a material of a functional portion is deposited and a material powder of a porous body; and forming a porous body through heating the precursor film to remove the pore-forming powder and sinter the material powder of the porous body, and forming the functional portion in a pore of the porous body.

In the method of manufacturing a functional porous film, after a pore-forming film including the pore-forming powder on which the material of the functional portion is deposited is formed, the pore-forming film may be impregnated with slurry including the material powder of the porous body so as to form the precursor film, or slurry including the pore-forming powder on which the material of the functional portion is deposited and the material powder of the porous body may be applied to form the precursor film.

As the pore-forming powder, an organic powder is preferably used, and a spherical pore-forming powder is preferably used. The "spherical pore-forming powder" in the invention means not only a perfect spherical powder but also a powder considered industrially spherical including a substantially spherical powder.

Moreover, the average particle diameter of the pore-forming powder is preferably within a range from 10 times to 10000 times larger than the average particle diameter of the material powder of the porous body, and as the pore-forming powder, a resin powder which decomposes into its monomer form by heat is preferable.

In addition, the material powder of the porous body is preferably sintered at a temperature equal to or higher than the thermal decomposition temperature of the pore-forming powder and equal to or lower than the melting point of the material powder of the porous body, and more preferably the material powder of the porous body is heated while changing the temperature from low to high within a range from the thermal decomposition temperature of the pore-forming powder to the melting point of the material powder of the porous body so as to sinter the material powder of the porous body.

A method of manufacturing a porous metal film according to the invention comprises the steps of: forming a precursor film including an organic powder and at least one kind of material powder selected from the group consisting of metal powders and metal precursor powders which are converted into metals by heating; and heating the precursor film to remove the organic powder and sinter the material powder.

A method of manufacturing a sensor according to the invention comprises the steps of: forming a precursor film including an organic powder and at least one kind of material powder selected from the group consisting of metal powders and metal precursor powders which are converted into metals by heating; and heating the precursor film to remove the organic powder and sinter the material powder, thereby forming a porous metal film.

In the method of manufacturing a porous metal film and the method of manufacturing a sensor according to the invention, the precursor film including an organic powder and at least one kind of material powder selected from the group consisting of metal powders and metal precursor powders which are converted into metals by heating is heated to sinter the material powder. At this time, the organic powder is removed by, for example, thermal decomposition, so a pore is formed in an area occupied with the organic powder. Therefore, the porosity, the size of the pore or the shape of the pore can be controlled by the organic powder.

In the invention, a spherical organic powder is preferably used. The "spherical organic powder" in the invention means not only a perfect spherical powder but also a powder considered industrially spherical including a substantially spherical powder as in the case of the above-described spherical pore-forming powder. Moreover, the average particle diameter of the organic powder is preferably within a range from 10 times to 10000 times larger than the average particle diameter of the material powder, and after the pore-forming film including the organic powder is formed, the precursor film may be formed through impregnating the pore-forming film with slurry including the material powder, or the precursor film may be formed through applying slurry including the organic powder and the material powder.

Further, as the organic powder, a resin powder which decomposes into its monomer form by heat is preferably used. In addition, the material powder is preferably sintered at a temperature equal to or higher than the thermal decomposition temperature of the organic powder and equal to or lower than the melting point of the material powder, and is more preferably heated while changing the temperature from low to high within the above range so as to sinter the material powder.

The functional porous film according to the invention comprises the functional portion in a pore, so the porous body and the functional portion can have different functions. Therefore, the functional porous film can be used as a component having a new function in various technical fields.

Specifically, when the porous body has a structure in which a plurality of particles are connected to one another, the size or the shape of the pore can be controlled with high precision. Therefore, the porosity and the specific surface area can be increased, and the uniformity of the size or the shape of the pore can be improved.

Moreover, when the functional portion is dispersed in particle form, the pore can be prevented from being sealed with the functional portion, or the size or the shape of the pore can be prevented from being largely changed. Further, the specific surface area of the functional portion can be increased, and the contact area between the functional portion and the porous body can be increased.

In the sensor according to the invention, the functional porous film according to the invention is used, so one component can have functions of the porous body and the functional portion. Therefore, downsizing of a device can be achieved, and the performance can be improved.

In the method of manufacturing a functional porous film according to the invention, the precursor film including the pore-forming powder on which the material of the functional portion is deposited and the material powder of the porous body is heated, so while the formation of the pore is controlled by the pore-forming powder, the functional portion including a functional material can be formed in the pore. Therefore, the functional porous film according to the invention can be easily obtained.

Specifically, when an organic powder is used as the pore-forming powder, the pore-forming powder can be easily removed by thermal decomposition.

Moreover, when a spherical powder is used as the pore-forming powder, the packing density of the pore-forming powder in the precursor film can be increased, thereby the porosity of the functional porous film can be increased, and the specific surface area can be increased.

Further, when the average particle diameter of the pore-forming powder is within a range from 10 times to 10000 times larger than the average particle diameter of the material powder of the porous body, the pore of the functional porous film can be easily controlled, and the uniformity of the pore can be improved.

In addition, when a resin powder which decomposes into its monomer form by heat is used as the pore-forming powder, the pore-forming powder can be rapidly decomposed by heat to be removed, so the pore can be formed in a state where the shape of the pore-forming powder is maintained, and the pore can be controlled with high precision. Further, a residue can be reduced.

Further, when the material powder of the porous body is sintered at a temperature equal to or higher than the thermal decomposition temperature of the pore-forming powder and equal to or lower than the melting point of the material powder of the porous body, only the surface of the material powder of the porous body can be slightly molten, and particles of the material powder of the porous body can be connected to one another in a state where the shape of the particles is maintained. Therefore, the pore can be controlled with high precision.

In the method of manufacturing a porous metal film according to the invention, the precursor film including the organic powder and the material powder is heated, so the porosity, the size of the pore or the shape of the pore can be easily controlled by the organic powder. Therefore, in the method of manufacturing a sensor, the characteristics of the sensor can be improved.

Specifically, in the method of manufacturing a porous metal film and the method of manufacturing a sensor according to the invention, when a spherical organic powder is used, the packing density of the organic powder in the precursor film can be increased, so the porosity of the porous metal film can be increased, and the specific surface area can be increased. Therefore, the response speed and the recovery speed of the sensor can be improved.

Moreover, when the average particle diameter of the organic powder is within a range from 10 times to 10000 times larger than the average particle diameter of the material power, the pore of the porous metal film can be more easily controlled, and the uniformity of the pore can be improved.

Further, when a resin powder which decomposes into its monomer form by heat is used as the organic powder, the organic powder can be rapidly decomposed by heat to be removed, so the pore can be formed in a state where the shape of the organic powder is maintained, and the pore can be controlled with high precision. Moreover, a residue can be reduced.

In addition, when the material powder is sintered at a temperature equal to or higher than the thermal decomposition temperature of the organic powder and equal to or lower than the melting point of the material powder, only the surface of the material powder can be slightly molten, and particles of the material powder can be connected to one another in a state where the particle shape is maintained. Therefore, the pore can be controlled with high precision.

Other and further objects, features and advantages of the invention will appear more fully from the following description.

### BRIEF DESCRIPTION OF THE DRAWINGS

FIG. 1 is a sectional view of a functional porous film according to an embodiment of the invention;
FIG. 2 is a flow chart of a method of manufacturing the functional porous film shown in FIG. 1;
FIGs. 3A, 3B and 3C are sectional views showing steps of the method of manufacturing the functional porous film shown in FIG. 2;
FIG. 4 is a flow chart of another method of manufacturing the functional porous film shown in FIG. 1;
FIG. 5 is a sectional view of a sensor using the functional porous film shown in FIG. 1;
FIG. 6 is a sectional view of another sensor using the functional porous film shown in FIG. 1;
FIG. 7 is a flow chart of a method of manufacturing a porous metal film according to an embodiment of the invention;
FIGs. 8A, 8B and 8C are sectional views showing steps of the method of manufacturing the porous metal film shown in FIG. 7;
FIG. 9 is a flow chart of a method of manufacturing a porous metal film according to another embodiment of the invention;
FIG. 10 is a flow chart of a method of manufacturing a sensor according to an embodiment of the invention;
FIG. 11 is a sectional view of a sensor formed through the method of manufacturing a sensor shown in FIG. 10;
FIG. 12 is a flow chart of a method of manufacturing a sensor according to another embodiment of the invention;
FIG. 13 is a sectional view of a sensor formed through the method of manufacturing a sensor shown in FIG. 12;
FIG. 14 is a microscope photograph of a PMMA particle used in Example 1;
FIG. 15 is a microscope photograph of the PMMA particle shown in FIG. 14 on which an indium oxide powder is deposited through mixing and compression bonding the indium oxide powder;
FIG. 16 is a microscope photograph of a functional porous film obtained in Example 1;
FIG. 17 is a plot of a response speed comparison between Example 1 and Comparative Example 1;
FIG. 18 is a microscope photograph of a PMMA particle used in Example 3 on which an indium oxide powder is deposited through spraying;
FIG. 19 is a microscope photograph of a porous metal film obtained in an example of the invention;
FIG. 20 is a enlarged microscope photograph of a part of the microscope photograph in FIG. 19; and
FIG. 21 is a plot of a response speed comparison between Examples 6-1 and 6-2 and Comparative Example 6-1.

### DETAILED DESCRIPTION OF THE PREFERRED EMBODIMENTS

Preferred embodiments of the invention will be described in more detail below referring to the accompanying drawings.

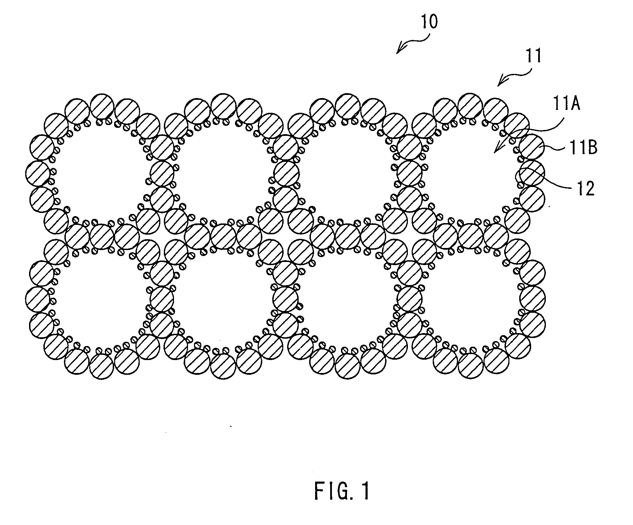

FIG. 1 shows the structure of a functional porous film 10 according to an embodiment of the invention. The functional porous film 10 comprises a porous body 11 having a pore 11A. The porous body 11 preferably has, for example, a structure in which a plurality of particles 11B are partially connected to one another. More specifically, for example, in the porous body 11, the pore 11A is preferably formed through connecting the plurality of particles 11B. It is because the size or the shape of the pore 11A can be controlled with high precision, so the porosity and the specific surface area of the porous body 11 can be increased, and the uniformity of the size or the shape of the pore 11A can be improved. The pore 11A is continuously connected to, for example, the outside, so a gas or the like can pass through the porous body 11.

On the inner wall of the pore 11A, a functional portion 12 having a different function from that of the porous body 11 is disposed. The functional portion 12 is preferably dispersed in particle form to be deposited on the porous body 11, because the pore 11A can be prevented from being sealed with the functional portion 12, or the size or the shape of the pore 11A can be prevented from being largely changed. Moreover, it is because the specific surface area of the functional portion 12 can be increased, and the contact area between the functional portion 12 and the porous body 11 can be increased.

FIG. 1 conceptually but not realistically shows a characteristic part of the functional porous film 10 according to the embodiment. For example, the particles 11B of the porous body 11 and the functional portion 12 have a spherical shape; however, they do not necessarily have a spherical shape, and the pores 11A are regularly arranged on a plane; however, the pores 11A are three-dimensionally arranged in actuality.

The materials of the porous body 11 and the functional portion 12 are variously selected according to the purpose. For example, as the material of the porous body 11, metal or ceramic is cited, and as the material of the functional portion 12, an oxide or a catalyst is cited. The functional portion 12 may be made of one kind of material, or a plurality of kinds of materials. For example, the functional portion 12 may be made of a plurality of kinds of materials so as to have a plurality of functions.

For example, the functional porous film 10 can be manufactured through the following steps.

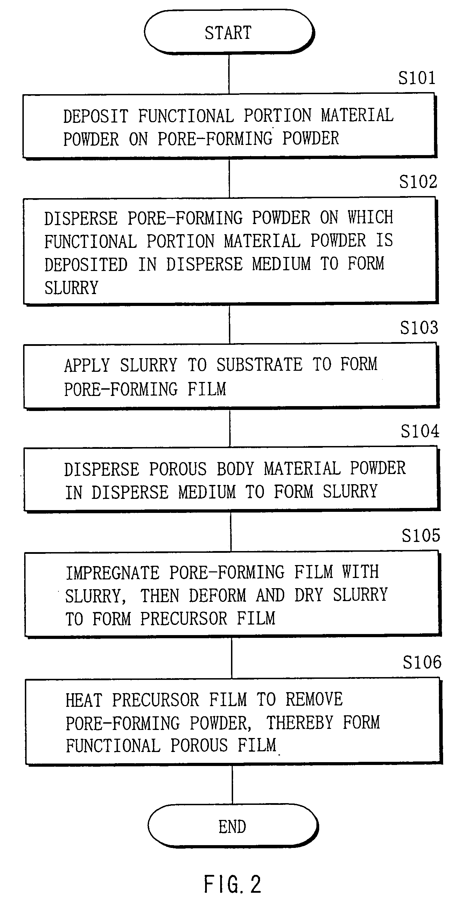

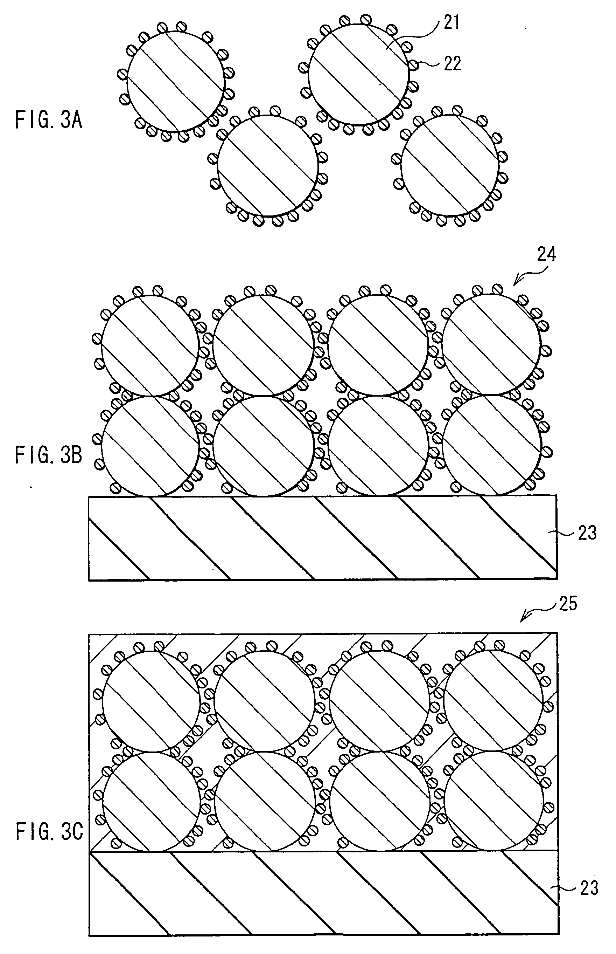

FIGs. 2, 3A, 3B and 3C show a method of manufacturing the functional porous film 10. At first, a pore-forming powder 21 and a functional portion material powder 22 which is a material of the functional portion 12 are prepared, and, for example, they are mixed so as to deposit the functional portion material powder 22 on the pore-forming powder 21 as shown in FIG. 3A (step S101). Moreover, slurry formed through dispersing the functional portion material powder 22 in a disperse medium may be sprayed on the pore-forming powder 21 so as to deposit the functional portion material powder 22 on the pore-forming powder 21, or the functional portion material powder 22 may be deposited on the pore-forming powder 21 through mixing the pore-forming powder 21 with slurry formed through dispersing the functional portion material powder 22 in a disperse medium, and then volatilizing the disperse medium.

As the pore-forming powder 21, for example, an organic powder which can be removed by thermal decomposition is preferable. The organic powder may be a powder made of a cross-linked polymer, a non-cross-linked polymer or a material except for polymers. A typical organic powder is made of, for example, an acrylic resin, a styrene resin, polyethylene, polypropylene, a polyacetal resin, a polycarbonate resin, a phenolic resin, an epoxy resin, a polyester resin, a copolymer of each monomer and another monomer, or each monomer.

Among them, as the organic powder, a resin powder which decomposes into its monomer form by heat is preferable, because the resin powder can be rapidly decomposed by heat so as to be removed, so the shape of the pore can be controlled with high precision, and a residue after thermal decomposition is small in quantity. As such an organic powder, an acrylic resin powder or a styrene resin powder is cited, and specifically the acrylic resin powder is preferable. The acrylic resin powder is made of, for example, a polymer or a copolymer of an acrylic acid, a methacrylic acid or a derivative thereof such as methyl methacrylate, ethyl methacrylate, butyl methacrylate, methyl acrylate, ethyl acrylate or butyl acrylate. The styrene resin powder is made of, for example, polystyrene or a copolymer of styrene and another monomer such as, for example, acrylonitrile, butadiene, methyl methacrylate or maleic anhydride.

Moreover, as the organic powder, an organic powder made of a derivative of an acrylic acid or a methacrylic acid which is their monomer is also preferable. However, an organic powder made of a polymer or a copolymer is more preferable, because the particle diameter and the shape of the organic powder can be adjusted with high precision.

The pore-forming powder 21 may have any shape such as a spherical shape, a spicular shape, a shape with projections, an ocellated-octopus-like shape; however, the spherical shape is preferable, because the packing density of the pore-forming powder 21 can be increased, thereby the porosity of the functional porous film 10 and the specific surface area can be increased.

For example, the average particle diameter of the pore-forming powder 21 is preferably within a range from 10 times to 10000 times larger than the average particle diameter of the functional portion material powder 22 and the average particle diameter of a porous body material powder which will be described later. When the size of the pore-forming powder 21 is too small, it is difficult to uniformly form the size and the shape of the pore 11A. On the other hand, when the size of the pore-forming powder 21 is too large, it is difficult to remove the pore-forming powder 21 through thermal decomposition. A mixture including two kinds of pore-forming powders 21 with different average particle diameters may be used. The particle diameter can be measured through, for example, various methods of measuring a particle size distribution such as microscopic observation, a light scattering method, a laser scattering method, a sedimentation velocity method, an X-ray scattering method and a cascade impactor method.

As the functional portion material powder 22, a powder of a functional material of which the functional portion 12 is made may be used, or a material which is converted into a functional material by heating may be used. As the material of the functional portion 12, the material in powder form is not necessarily prepared, and a solution in which the material of the functional portion 12 is dissolved may be used.

Next, the pore-forming powder 21 on which the functional portion material powder 22 is deposited is dispersed in a disperse medium to form slurry (step S102). As the disperse medium, a volatile liquid which has no effect on the pore-forming powder 21 is preferable, and examples of the disperse medium include water, alcohol such as methanol, ethanol, isopropanol, ethylene glycol, propylene glycol or glycerol, paraffin hydrocarbon, or a mixture thereof.

An additive such as a dispersant may be added to the slurry. Moreover, when the slurry is formed, the dispersibility of the pore-forming powder 21 may be improved by ultrasonic irradiation.

Next, as shown in FIG. 3B, after the slurry is applied to a substrate 23, the slurry is dried to remove the disperse medium, thereby a pore-forming film 24 including the pore-forming powder 21 on which the functional portion material powder 22 is deposited is formed (step S103). The pore-forming film 24 has, for example, a three-dimensional packing structure by self-assembly of the pore-forming powder 21. The slurry may be applied through any method such as printing, spin coating or dipping.

Moreover, the material powder of the porous body 11 (porous body material powder) is dispersed in a disperse medium to form slurry (step S104). As the porous body material powder, a powder of the material of which the porous body 11 is made or a powder of a material which is converted into the material of the porous body 11 by heating may be used. The size of the porous body material powder is preferably within a range from, for example, 1 nm to 100 µm. As the disperse medium, a volatile liquid which has no effect on the pore-forming powder 21 is preferable, and the same disperse medium as that used in the slurry is cited.

Next, as shown in FIG. 3C, the slurry is applied to the substrate 23 to impregnate the pore-forming film 24 with the slurry. Then, the slurry is defoamed in a vacuum, and dried to remove the disperse medium, thereby a precursor film 25 including the pore-forming powder 21 on which the functional portion material powder 22 is deposited and the porous body material powder is formed (step S105).

Next, the precursor film 25 is heated to remove the pore-forming powder 21 by thermal decomposition, and sinter the porous body material powder (step S106). At this time, the pore 11A is formed in an area occupied with the pore-forming powder 21. Specifically, as described above, when a resin powder which decomposes into its monomer form by heat is used as the pore-forming powder 21, the pore-forming powder 21 is rapidly decomposed by heat to be removed, so the pore 11A in good condition in a state where the shape of the pore-forming powder 21 is maintained can be formed. Further, a residue after thermal decomposition is small in quantity.

For example, the sintering temperature of the porous body material powder is preferably equal to or higher than the thermal decomposition temperature of the pore-forming powder 21 and equal to or lower than the melting point of the porous body material powder. It is because the pore-forming powder 21 can be sufficiently removed, and only the surface of the porous body material powder can be slightly molten, thereby particles of the porous body material powder can be connected to one another in a state where the particle shape is maintained; therefore, the pore 11A can be controlled with high precision. For example, in the case where a powder of poly(methyl methacrylate) (hereinafter referred to as PMMA) which is a kind of acrylic resin is used as the pore-forming powder 21, and a powder of gold (Au) is used as the porous body material powder, it is preferable to heat the porous body material powder at a temperature from the thermal decomposition temperature of PMMA, approximately 400°C to the melting point of gold, 1064°C.

Moreover, at this time, heating may be performed while changing the temperature from low to high within a range from the thermal decomposition temperature of the pore-forming powder 21 to the melting point of the porous body material powder, because the pore 11A can be controlled with higher precision. The temperature may be gradually or continuously changed. For example, in the case where a PMMA powder is used as the pore-forming powder 21, and a gold powder is used as the porous body material powder, it is preferable that after the precursor film 25 is heated at a temperature close to 400°C for two hours to remove the PMMA powder, the precursor film 25 is heated at a temperature close to 800°C for approximately one hour to sinter the porous body material powder, thereby the pore 11A in good condition in a state where the shape of the PMMA powder is maintained can be obtained. Thereby, the functional porous film 10 shown in FIG. 1 can be obtained.

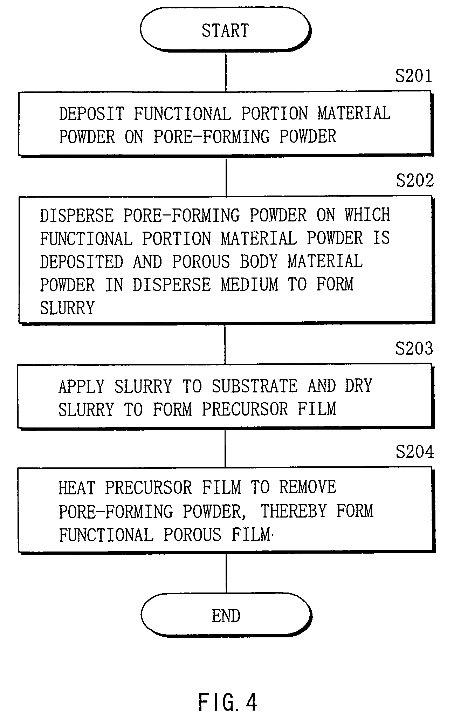

Moreover, the precursor film 25 may be formed through the following steps. FIG. 4 shows another method of manufacturing a functional porous film. In the following description, referring to FIG. 3, like components are denoted by like numerals.

At first, as in the case of the above-described method of manufacturing a functional porous film, the functional portion material powder 22 is deposited on the pore-forming powder 21 (step S201). The pore-forming powder 21 and the functional portion material powder 22 are the same as those in the above-described manufacturing method. Next, the pore-forming powder 21 on which the functional portion material powder 22 is deposited and the porous body material powder are dispersed in a disperse medium to form slurry (step S202). The porous body material powder and the disperse medium are the same as those in the above-described manufacturing method. An additive such as a dispersant may be added to the slurry, and the dispersibility of the slurry may be improved by ultrasonic irradiation.

Next, the slurry is applied to the substrate 23, and the slurry is dried to remove the disperse medium, thereby the precursor film 25 is formed (step S203; refer to FIG. 3C). After that, as in the case of the above-described manufacturing method, the precursor film 25 is heated to form the functional porous film 10 (step S204).

Thus, the functional porous film 10 according to the embodiment has the functional portion 12 on the inner wall of the pore 11A, so the porous body 11 and the functional portion 12 have different functions. Therefore, as a component with a new function, the functional porous film 10 can be used in various technical fields.

Specifically, when the porous body 11 has a structure in which a plurality of particles 11B are connected, the size or the shape of the pore 11A can be controlled with high precision. Therefore, the porosity and the specific surface area can be increased, and the uniformity of the size or the shape of the pore 11A can be improved.

Moreover, when the functional portion 12 is dispersed in particle form to be deposited on the porous body 11, the pore 11A can be prevented from being sealed with the functional portion 12, or the size or the shape of the pore 11A can be prevented from being largely changed. Further, the specific surface area of the functional portion 12 as well as the contact area between the functional portion 12 and the porous body 11 can be increased.

In the method of manufacturing a functional porous film according to the embodiment, the precursor film 25 including the pore-forming powder 21 on which the functional portion material powder 22 is deposited and the porous body material powder is heated, so while the formation of the pore 11A is controlled by the pore-forming powder 21, the functional portion 12 can be formed on the inner wall of the pore 11A. Therefore, the functional porous film 10 according to the embodiment can be easily obtained.

Specifically, when the organic powder is used as the pore-forming powder 21, the pore-forming powder 21 can be easily removed by thermal decomposition.

Moreover, when a powder with a spherical shape is used as the pore-forming powder 21, the packing density of the pore-forming powder 21 in the precursor film 25 can be increased, and the porosity of the functional porous film 10 as well as the specific surface area can be increased.

Further, when the average particle diameter of the pore-forming powder 21 is within a range from 10 times to 10000 times larger than the average particle diameter of the porous body material powder, the pore 11A of the functional porous film 10 can be easily controlled, and the uniformity of the pore 11A can be improved.

In addition, when a resin powder which decomposes into its monomer form by heat is used as the pore-forming powder 21, the pore-forming powder 21 can be rapidly decomposed by heat to be removed, so the pore 11A can be formed in a state where the shape of the pore-forming powder 21 is maintained, and the pore 11A can be controlled with high precision. Further, a residue can be reduced.

Further, when the porous body material powder is sintered at a temperature from the thermal decomposition temperature of the pore-forming powder 21 to the melting point of the porous body material powder, only the surface of the porous body material powder can be slightly molten, and the particles of the porous body material powder can be connected to one another in a state where the particle shape is maintained. Therefore, the pore 11A can be controlled with high precision.

The functional porous film 10 can be used for, for example, various sensors.

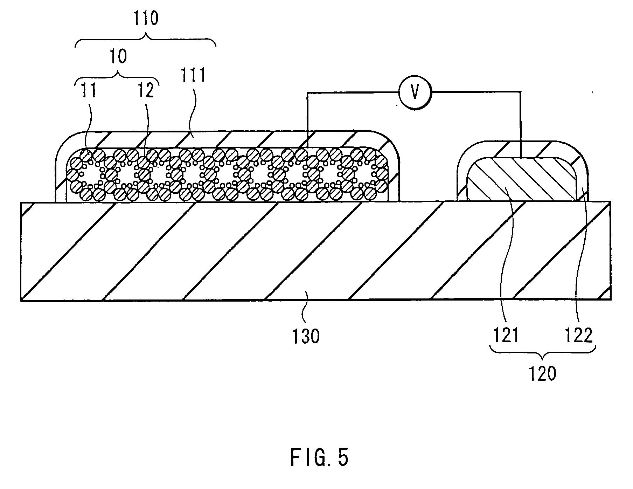

FIG. 5 shows the structure of a sensor according to an embodiment which uses the functional porous film 10. The sensor detects carbon dioxide, and comprises a detection electrode 110 and a counter electrode 120 which are disposed on the same surface of a solid electrolyte 130, and a lead is drawn from each of the detection electrode 110 and the counter electrode 120 to be connected to a potentiometer. The detection electrode 110 and the counter electrode 120 may be opposed to each other with the solid electrolyte 130 in between; however, they are preferably disposed on the same surface, because the lead can be easily drawn, and the manufacturing steps can be simplified. This disposition is also preferable to downsize a device.

The detection electrode 110 includes the functional porous film 10. The porous body 11 is made of, for example, a metal, and has a function as a current collector. As the metal of which the porous body 11 is made, for example, a simple substance or an alloy of gold, platinum (Pt), silver (Ag), ruthenium (Ru), rhodium (Rh), palladium (Pd), iridium (Ir), nickel (Ni), copper (Cu), or chromium (Cr) is preferable.

The functional portion 12 includes, for example, a metal oxide, and has a function as a carbon dioxide detecting portion. As the metal oxide, for example, at least one kind selected from the group consisting of tin oxide (SnO, SnO₂), indium oxide (In₂O₃), cobalt oxide (Co₃O₄), tungsten oxide (WO₃), zinc oxide (ZnO), lead oxide (PbO), copper oxide (CuO), iron oxide (Fe₂O₃, FeO), nickel oxide (NiO), chromium oxide (Cr₂O₃), cadmium oxide (CdO), bismuth oxide (Bi₂O₃), manganese oxide (MnO₂, Mn₂O₃), yttrium oxide (Y₂O₃), antimony oxide (Sb₂O₃), lanthanum oxide (La₂O₃), cerium oxide (CeO₂), praseodymium oxide (Pr₆O₁₁), neodymium oxide (Nd₂O₃), silver oxide (Ag₂O), lithium oxide (Li₂O), sodium oxide (Na₂O), potassium oxide (K₂O), rubidium oxide (Rb₂O), magnesium oxide (MgO), calcium oxide (CaO), strontium oxide (SrO) and barium oxide (BaO) is preferably included.

When these metal oxides are used, carbon dioxide can be quickly measured at a low temperature. These metal oxides may deviate from their stoichiometric compositions to an extent. When two or more kinds of oxides are included, they may be included as a complex oxide thereof or a mixture thereof.

As the metal oxide, at least one kind selected from the group consisting of tin oxide, indium oxide, cobalt oxide, tungsten oxide, zinc oxide, lead oxide, copper oxide, iron oxide, nickel oxide, chromium oxide, cadmium oxide and bismuth oxide, more specifically at least one kind selected from the group consisting of tin oxide, indium oxide, zinc oxide and tungsten oxide is preferably included, because a higher effect can be obtained. Moreover, a complex oxide including tin and indium is preferably included, because conductivity can be increased.

The functional portion 12 may include, for example, a metal carbonate. As the metal carbonate, for example, an alkali metal carbonate, an alkaline earth metal carbonate or a transition metal carbonate is preferable. The transition metal carbonate is a carbonate of an element in Groups 3 through 11 in the long form of the periodic table of the elements.

As the alkali metal carbonate, for example, lithium carbonate (Li₂CO₃), sodium carbonate (Na₂CO₃), potassium carbonate (K₂CO₃), rubidium carbonate (Rb₂CO₃) or cesium carbonate (Cs₂CO₃) is cited. As the alkaline earth metal carbonate, for example, manganese carbonate (MgCO₃), calcium carbonate (CaCO₃), strontium carbonate (SrCO₃) or barium carbonate (BaCO₃) is cited. As the transition metal carbonate, for example, manganese carbonate (Mn(CO₃)₂, Mn₂(CO₃)₃), iron carbonate (Fe₂(CO₃)₃, FeCO₃), nickel carbonate (NiCO₃), copper carbonate (CuCO₃), cobalt carbonate (Co₂(CO₃)₃), chromium carbonate (Cr₂(CO₃)₃), silver carbonate (Ag₂CO₃), yttrium carbonate (Y₂(CO₃)₃), lanthanum carbonate (La₂(CO₃)₃), cerium carbonate (Ce(CO₃)₃), praseodymium carbonate (Pr₆(CO₃)O₁₁) or neodymium carbonate (Nd₂(CO₃)₃) is cited.

In addition to them, as the metal carbonate, for example, zinc carbonate (ZnCO₃), cadmium carbonate (CdCO₃), indium carbonate (In₂(CO₃)₃), lead carbonate (PbCO₃) or bismuth carbonate (Bi₂(CO₃)₃) is preferable. These metal carbonates may deviate from their stoichiometric compositions to an extent. Moreover, one kind or two or more kinds of metal carbonates may be included. When two or more kinds of metal carbonates are included, a complex carbonate thereof or a mixture thereof may be used.

The functional portion 12 may further include, for example, a metal hydrogen carbonate, because when carbon dioxide is measured, a metal hydrogen carbonate may be produced.

The detection electrode 110 may further include a detection layer 111 for detecting carbon dioxide if necessary. It is preferable that the detection layer 111 is made of, for example, the same material as that of the functional portion 12, and is porous. In FIG. 5, the detection layer 111 is disposed on the functional porous film 10; however, the detection layer 111 may be disposed on the solid electrolyte 130, and the functional porous film 10 may be formed on the detection layer 111, or the functional porous film 10 may be disposed in the detection layer 111.

The counter electrode 120 includes a reference layer 121 disposed on the solid electrolyte 130 and a cap layer 122 disposed so as to be laid over the reference layer 121.

It is preferable that the reference layer 121 is made of, for example, a metal or a metal oxide, and is porous. As the metal or the metal oxide of which the reference layer 121 is made, for example, the metal oxide described in the functional portion 12 of the detection electrode 110, or the metal described in the porous body 11 or an oxide thereof is preferable. Specifically, the metal oxide is preferably used in the reference layer 121, because the effect of a coexisting gas can be reduced, high carbon dioxide selectivity can be obtained, moisture resistance can be improved, and the effect of moisture in measurement at a low temperature can be reduced.

The cap layer 122 keeps the reference layer 121 from contacting with a measurement atmosphere so as to reduce the effect of humidity. The cap layer 122 is preferably made of a fluorine-based resin, inorganic ceramic, cobaltate or the like. The cap layer 122 may be removed; however, the cap layer 122 is preferably included, because the effect of humidity can be reduced.

The solid electrolyte 130 includes, for example, a metal ion conductor. As the metal ion conductor, for example, Na-β"-alumina, Na- β-alumina, Na₃Zr₂PSi₂O₁₂, Na₃Zr₂Si₂PO₁₂ (NASICON), Na- β -Ga₂O₃, Na-Fe₂O₃, Na₃Zr₂PSi₂P₂O₁₂, Li- β -alumina, Li₁₄Zn(GeO₄)₄, Li₃Zn_{0.5}GeO₄, Li_{3.5}Zn_{0.25}GeO₄ (LISICON), lithium ion-exchange NASICON, Li₅AlO₄, Li_{1.4}Ti_{1.6}In_{0.4}P₃O₁₂, K-β-alumina, K_{1.6}Al_{0.8}Ti_{7.2}O₁₆, K₂MgTi₇O₁₆, CaS or the like is cited. Among them, a sodium ion conductor or a lithium ion conductor is preferable, and specifically NASICON, LISICON, lithium ion-exchange NASICON or the like is preferable, because ion conduction required for sensor response at a low temperature is confirmed. They may deviate from their stoichiometric compositions to an extent.

In addition to the metal ion conductor, the solid electrolyte 130 may include 50% by mass or less of aluminum oxide (Al₂O₃), silicon oxide (SiO₂), zirconium oxide (ZrO₂), silicon carbonate (SiC), silicon nitride (Si₃N₄), iron oxide (Fe₂O₃) or the like as a reinforcing agent which does not interfere ion conduction. They may deviate from their stoichiometric compositions to an extent. Moreover, as the solid electrolyte 130, a polymer electrolyte may be used.

For example, the sensor can be manufactured through the following steps.

At first, the solid electrolyte 130 is formed through any of various methods such as a solid-phase method, a sol-gel method and a coprecipitation method. Next, on the solid electrolyte 130, the functional porous film 10 is formed as described above (refer to FIGs. 2, 3A, 3B and 3C). In this case, the solid electrolyte 130 functions as the substrate 23. As the functional portion material powder 22, the powder of the above-described metal oxide of which the functional portion 12 is made is used. Moreover, as the porous body material powder, the powder of the above-described metal of which the porous body 11 is made, or the powder of a metal precursor powder which is converted into the above-described metal by heating, such as, for example, resinate metal (sulfide metal) or an organic metal is used. The average particle diameter of the porous body material powder is preferably within a range of 1 nm to 100 µm, more specifically within a range of 10 nm to 10 µm, because the application by printing can be easily performed. As a disperse medium, for example, α-terpineol , ethylene glycol or glycerol is preferably used, because reactivity and vapor pressure at room temperature are relatively low, and workability is good.

Next, on the functional porous film 10, the detection layer 111 is formed as necessary to form the detection electrode 110. For example, the powder of the above-described metal oxide of which the detection layer 111 is made is dispersed in a disperse medium to form a paste, and the paste is applied to the functional porous film 10, and the paste is heated. The average particle diameter of the metal oxide is preferably within a range of 10 nm to 100 µm, because the application by printing can be easily performed. As the disperse medium, as in the case of the functional porous film 10, for example , α-terpineol, ethylene glycol or glycerol is preferably used.

After the detection electrode 110 is formed, for example, the reference layer 121 is formed on the solid electrolyte 130 as in the case of the detection layer 111. The reference layer 121 may be formed in a different step from or the same step as the step of forming the detection layer 111. After the reference layer 121 is formed, the cap layer 122 is formed so as to be laid over the reference layer 121, thereby the counter electrode 120 is formed. After that, a lead is attached to each of the detection electrode 110 and the counter electrode 120 to be connected to the potentiometer. Thereby, the sensor shown in FIG. 5 is formed.

In the sensor, when the detection electrode 110 is exposed to a measurement atmosphere, carbon dioxide in the measurement atmosphere is dispersed to the detection electrode 110, thereby the dissociation equilibrium between the metal carbonate and carbon dioxide is changed. Accordingly, metal ion activity in the solid electrolyte 130 in proximity to the detection electrode 110 is changed. Thereby, an electromotive force is generated between the detection electrode 110 and the counter electrode 120 so as to measure the concentration of carbon dioxide.

Specifically, in the sensor, the functional porous film 10 is used in the detection electrode 110, so the specific surface areas of the porous body 11 which functions as a current collector and the functional portion 12 which functions as a carbon dioxide detecting portion are increased. Moreover, the contact area between the porous body 11 and the functional portion 12 is increased, and the contact between them is improved. Therefore, superior sensitivity and higher response speed can be obtained.

Thus, in the sensor according to the embodiment, the detection electrode 110 uses the functional porous film 10 according to the embodiment, so the detection electrode 110 can be thinner. Thereby, downsizing of the device can be achieved.

Moreover, the specific surface areas of the porous body 11 as a current collector and the functional portion 12 as a carbon dioxide detecting portion can be increased, and the contact area between the porous body 11 and the functional portion 12 can be increased, thereby the contact between them can be improved. Therefore, the sensitivity and the response speed can be improved.

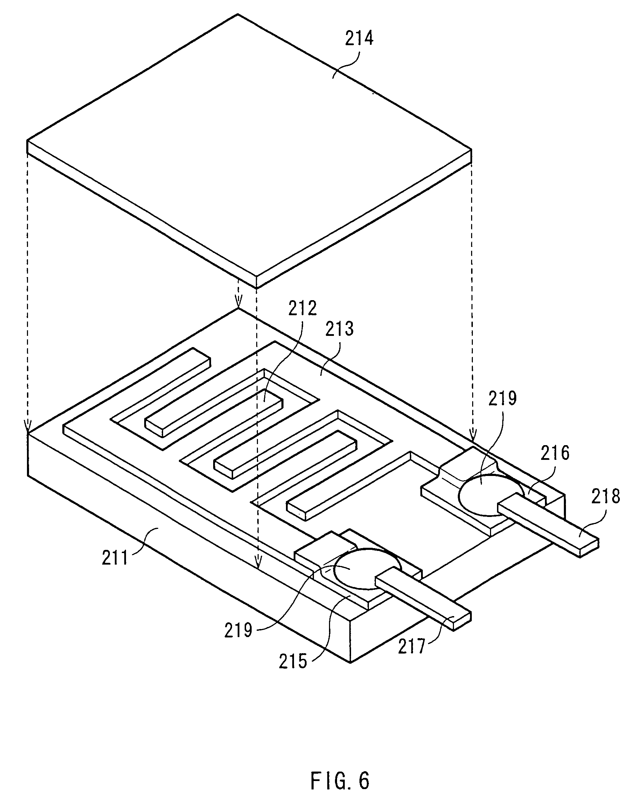

FIG. 6 shows the structure of a sensor according to another embodiment which uses the functional porous film 10. The sensor detects hydrogen, and comprises a pair of electrodes 212 and 213 with a comb shape which face each other with a gap in between, and a sensitive film 214 which is disposed so as to be electrically connected to the electrodes 212 and 213 on an insulating substrate 211.

The insulating substrate 211 is made of, for example, glass, plastic such as a phenolic resin or an epoxy resin, ceramic such as aluminum oxide, a metal plate insulated with a resin, or the like. Among them, aluminum oxide is preferable, because aluminum oxide has high mechanical strength, high insulation and high stability.

The electrodes 212 and 213 are made of the functional porous film 10. The porous body 11 is made of, for example, a metal, and functions as a conducting portion for passing a current therethrough. As the metal of which the porous body 11 is made, for example, the same metals as those described in the above sensor are cited. The functional portion 12 includes, for example, a metal oxide such as tin oxide, and functions as a hydrogen detecting portion. The metal oxide may deviate from its stoichiometric composition to an extent. One kind or two or more kinds of metal oxides may be included. When two or more kinds of metal oxides are included, they may be included as a complex oxide thereof or a mixture thereof.

It is preferable that the sensitive film 214 is made of, for example, the same material as that of the functional portion 12, and is porous.

Electrode terminals 215 and 216 are attached to each end portion of the electrodes 212 and 213, respectively, and leads 217 and 218 are connected to the electrode terminals 215 and 216 by a solder layer 219, respectively. The electrode terminals 215 and 216 are preferably made of a material having compatibility with solder, and the electrode terminals 215 and 216 are made of, for example, a metal material such as a silver-palladium (Ag-Pd) alloy.

For example, the sensor can be manufactured through the following steps.

At first, as described above, the functional porous film 10 is formed on the insulating substrate 211 to form the electrodes 212 and 213. In this case, the insulating substrate 211 functions as the substrate 11. Next, the sensitive film 214 is formed on the insulating substrate 211 on which the electrodes 212 and 213 are formed. For example, the powder of the above-described metal oxide of which the sensitive film 214 is made is dispersed in a disperse medium to form a paste, and the paste is applied to the insulating substrate 211, and the paste is heated. Then, the electrode terminals 215 and 216 are attached to the electrodes 212 and 213, respectively. After that, the leads 217 and 218 are connected to the electrode terminals 215 and 216 by the solder layer 219, respectively. Thereby, the sensor shown in FIG. 6 is formed.

In the sensor, electrical characteristics of the sensitive film 214 such as electrical conductivity, charged capacity or AC impedance are changed according to the concentration of hydrogen in the measurement atmosphere. Specifically, in the sensor, the functional porous film 10 is used as the electrodes 212 and 213, so the contact area between the porous body 11 which functions as a conducting portion, the functional portion 12 which functions as a hydrogen detecting portion and the sensitive film 214 is increased, and the contact between them is improved. Thereby, superior sensitivity and higher response speed can be obtained.

Thus, in the sensor according to the embodiment, the functional porous film 10 according to the embodiment is used in the electrodes 212 and 213, so the contact area between the porous body 11 as a conducting portion, the functional portion 12 as a detecting portion and the sensitive film 214 can be increased, and the contact between them can be improved. Therefore, the sensitivity and the response speed can be improved.

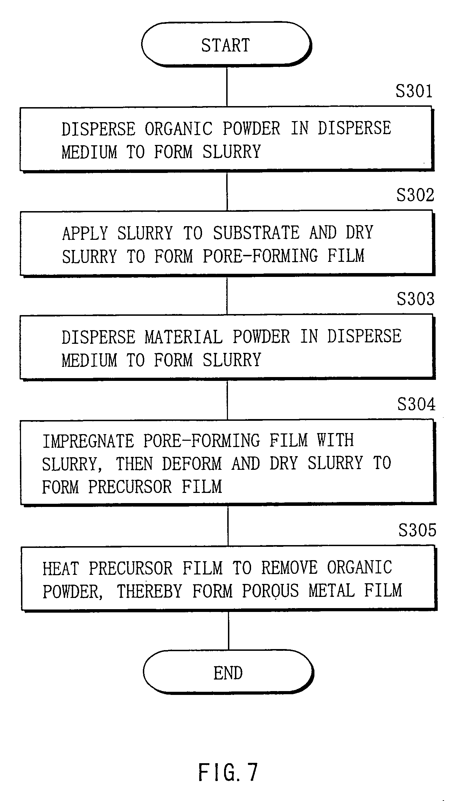

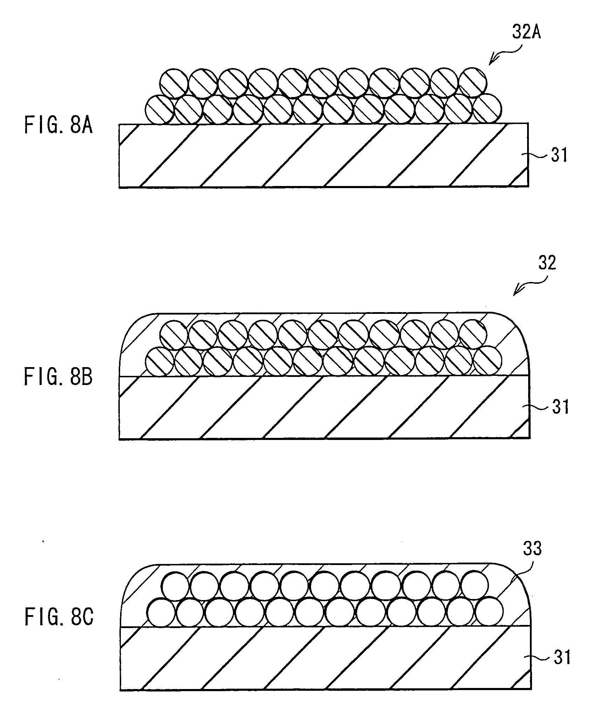

FIGs. 7, 8A, 8B and 8C show a method of manufacturing a porous metal film according to an embodiment of the invention. The method of manufacturing a porous metal film has a number of commonalities with the above-described method of manufacturing the functional porous film 10, so common parts will be so indicated and will not be described in detail.

At first, an organic powder is dispersed in a disperse medium to form slurry (step S301). The organic powder functions as the pore-forming powder 21 described in the above method of manufacturing the functional porous film 10. The specific material of the organic powder is the same as that described above, and an acrylic resin powder is specifically preferable as in the case of the pore-forming powder 21.

The average particle diameter of the organic powder is preferably within a range from 10 times to 10000 times larger than the average particle diameter of the material powder of a metal which will be described later. It is because while the shape of the organic powder is maintained, the organic powder can be completely removed by thermal decomposition, so a pore can be easily controlled. A mixture of two or more kinds of organic powders with different average particle diameters may be used. The particle diameter can be measured as in the case of the pore-forming powder 21 in the above method of manufacturing the functional porous film 10.

As the disperse medium, a volatile liquid which has no effect on the organic powder is preferable. For example, the same disperse medium as that of the slurry (refer to step S102) in the above method of manufacturing the functional porous film 10 is cited.

In addition, an additive such as a dispersant may be added to the slurry. Moreover, when the organic powder is formed, dispersibility of the organic powder may be improved by ultrasonic irradiation.

Next, as shown in FIG. 8A, after the slurry is applied to the substrate 31, the slurry is dried to remove the disperse medium, thereby the pore-forming film 32A including the organic powder is formed (step S302). The pore-forming film 32A has, for example, a three-dimensional packing structure by self-assembly of the organic powder. The method of applying the slurry is the same as the method of applying the slurry in the method of manufacturing the functional porous film 10.

Next, a metal powder or a metal precursor powder which is converted into a metal by heating is prepared as the material powder, and the material powder is dispersed in a disperse medium to form slurry (step S303). As the metal powder, a metal powder including the simple substance of a metal or an alloy powder may be used. As the metal precursor powder, for example, a powder made of resinate metal (sulfide metal and chloride metal) or an organic metal is cited. Moreover, only one kind of the material powder or a mixture of two or more kinds of the material powders may be used, and a mixture of a metal powder and a metal precursor powder may be used. For example, the size of the material powder is preferably 1 nm to 100 µm. As the disperse medium, a volatile liquid which has no effect on the organic powder is preferable, and the same volatile liquid as that used in the slurry is cited.

After the slurry is formed, as shown in FIG. 8B, the slurry is applied to the substrate 31 to impregnate the pore-forming film 32A with the slurry. Next, the slurry is defoamed in a vacuum, and dried to remove the disperse medium, thereby a precursor film 32 including the organic powder and the material powder is formed (step S304).

Then, as shown in FIG .8C, the precursor film 32 is heated to remove the organic powder by thermal decomposition, and sinter the material powder (step S305). At this time, a pore is formed in an area occupied with the organic powder. Specifically when a resin powder which decomposes into its monomer form by heat is used as the organic powder, the resin powder is rapidly decomposed by heat to be removed, so a pore in good condition in a state where the shape of the organic powder is maintained can be formed. Further, a residue after thermal decomposition is small in quantity.

For example, as in the case of the method of manufacturing the functional porous film 10, the sintering temperature of the material powder is preferably equal to or higher than the thermal decomposition temperature of the organic powder and equal to or lower than the melting point of the material powder, and heating may be performed while gradually or continuously changing the temperature from low to high. As described above, it is because the pore can be controlled with high precision. Thereby, the porous metal film 33 can be obtained.

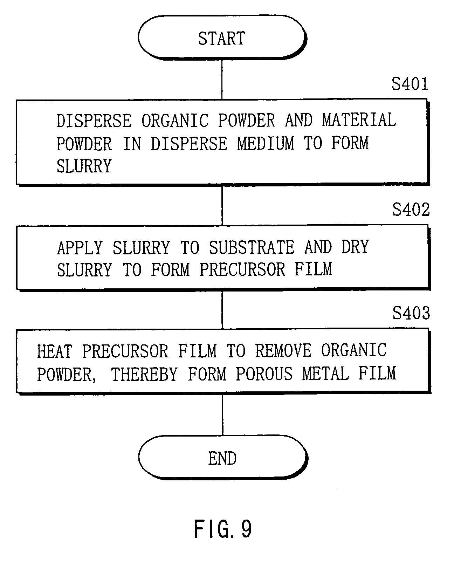

Moreover, the precursor film 32 may be formed through the following steps. FIG. 9 shows another method of manufacturing a porous metal film. In the following description, referring to FIGs. 8A, 8B and 8C, like components are denoted by like numerals.

At first, the organic powder and the material powder are dispersed in a disperse medium to form slurry (step S401). The organic powder, the material powder and the disperse medium are the same as those in the above-described method of manufacturing a porous metal film. An additive such as a dispersant may be added to the slurry, and the dispersibility of the slurry may be improved by ultrasonic irradiation.

Next, the slurry is applied to the substrate 31, and the slurry is dried to remove the disperse medium, thereby the precursor film 32 is formed (step S402; refer to FIG. 8B). Then, as in the case of the above-described method of manufacturing a porous metal film, the precursor film 32 is heated to form the porous metal film 33 (step S403; refer to FIG. 8C).

Thus, in the embodiment, the precursor film 32 including the organic powder and the material powder is formed, and the precursor film 32 is heated to form the porous metal film 33, so the porosity, the size of the pore or the shape of the pore can be easily controlled by the organic powder. Therefore, the porous metal film 33 with a desired characteristic can be easily obtained.

Specifically, when a spherical organic powder is used, the packing density of the organic powder in the precursor film 32 can be increased, thereby the porosity of the porous metal film 33 and the specific surface area can be increased.

Moreover, when the average particle diameter of the organic powder is within a range from 10 times to 10000 times larger than the average particle diameter of the material particle, the pore in the porous metal film 33 can be more easily controlled, and the uniformity of the pore can be improved.

Further, when a resin powder which decomposes into its monomer form by heat is used as the organic powder, the organic powder can be rapidly removed by thermal decomposition, so the pore in a state where the shape of the organic powder is maintained can be formed. Therefore, the pore can be controlled with high precision. Further, a residue can be reduced.

In addition, when the material powder is sintered at a temperature which is equal to or higher than the thermal decomposition temperature of the organic powder and equal to or lower than the melting point of the material powder, the organic powder can be sufficiently removed, and only the surface of the material powder can be slightly molten, so particles of the material powder can be connected to one another in a state where the particle shape is maintained. Therefore, the pore can be controlled with high precision.

The method of manufacturing a porous metal film according to the embodiment can be applied to manufacturing various sensors.

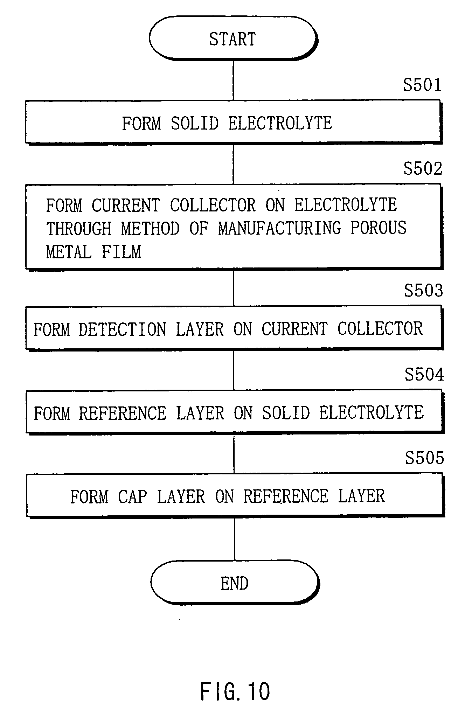

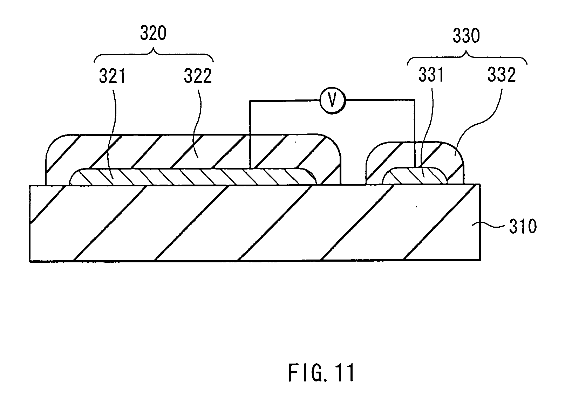

FIG. 10 shows an embodiment of a method of manufacturing a sensor using the method of manufacturing a porous metal film according to the embodiment. In the method of manufacturing the sensor, for example, a carbon dioxide sensor shown in FIG. 11, more specifically a carbon dioxide sensor with a structure in which a detection electrode 320 and a counter electrode 330 are disposed on a solid electrolyte 310 and a lead is drawn from each of the detection electrode 320 and the counter electrode 330 to be connected to a potentiometer is manufactured. The structure of the carbon dioxide sensor is partially in common with that of the sensor shown in FIG. 5, so common parts will be so indicated, and will not be described in detail.

At first, the solid electrolyte 310 is formed (step S501). The solid electrolyte 310 is preferably made of the same material as that of the above-described solid electrolyte 130, and the solid electrolyte 310 can be formed as in the case of the solid electrolyte 130.

Next, the porous metal film is formed on the solid electrolyte 310 through the above-described method of manufacturing a porous metal film, and the porous metal film is used as a current collector 321 of the detection electrode 320 (step S502). In this case, the solid electrolyte 310 functions as the substrate 31 in the method of manufacturing a porous metal film. Moreover, as the material powder, one or more kinds selected from the group consisting of powders of the simple substances of metals such as gold, platinum, silver, ruthenium, rhodium, palladium, iridium, nickel, copper and chromium, powders of alloys thereof and metal precursor powders which are converted into the simple substances or the alloy by heating is preferably used. The average particle diameter of the material powder is preferably within a range of 1 nm to 100 µm, and more preferably within a range of 10 nm to 10 µm, because the application by printing can be easily performed. As the disperse medium of the slurry, for example, α-terpineol, ethylene glycol or glycerol is preferably used, because reactivity and vapor pressure at room temperature are relatively low, and workability is good.

Next, a detection layer 322 made of a porous film is formed on the current collector 321 to form the detection electrode 320 (step S503). The detection layer 322 is preferably made of, for example, the same material as that of the functional portion 12 as in the case of the above-described detection layer 111, and the detection layer 322 can be formed as in the case of the detection layer 111.

In FIG. 11, the current collector 321 is disposed adjacent to the solid electrolyte 310; however, the current collector 321 may be disposed in the detection layer 322, or on a surface of the detection layer 322 opposite to a surface where the solid electrolyte 310 is formed. In this case, the order in which the current collector 321 and the detection layer 322 are formed is changed as necessary.

After the detection electrode 320 is formed, a porous film made of a metal or a metal oxide is formed as in the case of the current collector 321 or the detection layer 322 to form a reference layer 331 of the counter electrode 330 (step S504). As the metal or the metal oxide of which the reference layer 331 is made, one or more kinds selected from the group consisting of the same metal as that of the current collector 321 and an oxide thereof, and the same metal oxide as that of the detection layer 322 is preferable. The reference layer 331 may be formed in a different step from or the same step as the step of forming the current collector 321 or the detection layer 322.

After the reference layer 331 is formed, a cap layer 332 is formed so as to be laid over the reference layer 331, thereby the counter electrode 330 is formed (step S505). The cap layer 332 is preferably made of, for example, the same material as that of the cap layer 122.

After that, a lead is attached to each of the detection electrode 320 and the counter electrode 330 to be connected to a potentiometer. Thereby, the carbon dioxide sensor shown in FIG. 11 is formed.

Thus, in the method of manufacturing a sensor according to the embodiment, the current collector 321 or the current collector 321 and the reference layer 331 are formed through the method of manufacturing a porous metal film according to the embodiment, so their porosity, the size of the pore, the shape of the pore or the like can be easily controlled. Therefore, a reaction product or carbon dioxide in the detection layer 322 can efficiently pass through the pore. Moreover, the specific surface area of the current collector 321 or the reference layer 331 can be increased, and the contact area with the detection layer 322 or the solid electrolyte 310 can be increased. Therefore, the response speed and the recovery speed can be improved. Further, when the organic powder which decomposes into its monomer form by heat is used, a residue after thermal decomposition is reduced, so an effect on the reactivity in the detection electrode 320 is small, so high characteristics can be obtained.

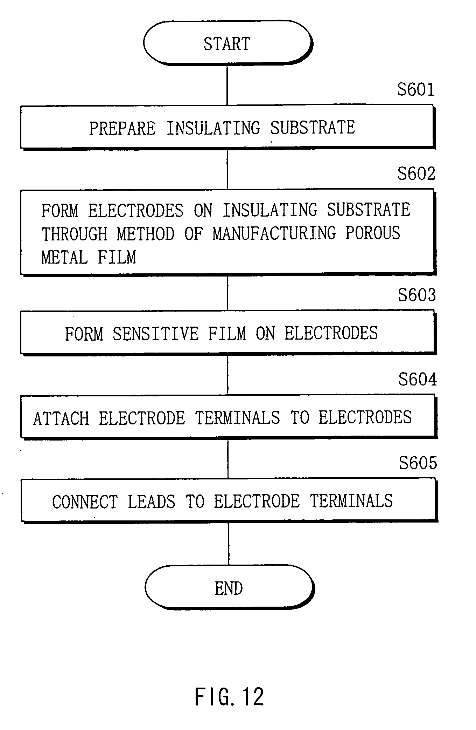

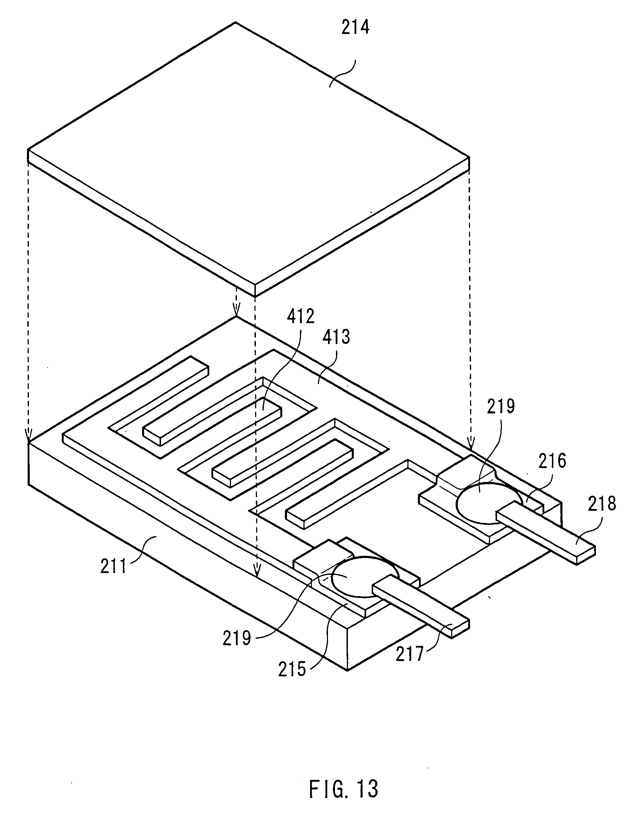

FIG. 12 shows another embodiment of the method of manufacturing a sensor using the method of manufacturing a porous metal film according to the embodiment. In the method of manufacturing a sensor, for example, a hydrogen sensor shown in FIG. 13, more specifically a hydrogen sensor with a structure in which a pair of electrodes 412 and 413 with a comb shape which face each other with a gap in between are disposed on the insulating substrate 211, and the sensitive film 214 is disposed so as to be electrically connected to the electrodes 412 and 413 is manufactured. The hydrogen sensor is the same as the sensor shown in FIG. 6, except that the structures of the electrodes 412 and 413 are different from those in the sensor shown in FIG. 6. Therefore, like components are denoted by like numerals, and will not be further described in detail.

At first, the insulating substrate 211 is prepared (step S601). Next, a porous metal film is formed on the insulating substrate 211 through the above-described method of manufacturing a porous metal film, and a pair of electrodes 412 and 413 are formed with a gap in between (step S602). In this case, the insulating substrate 211 functions as the substrate 31 in the method of manufacturing a porous metal film. The material and the average particle diameter of the material powder, and the disperse medium of the slurry are the same as those in the method of manufacturing a sensor shown in FIGs. 10 and 11.

Next, the sensitive film 214 is formed on the insulating substrate 211 on which the electrodes 412 and 413 are formed (step S603).

After the sensitive film 214 is formed, the electrode terminals 215 and 216 are attached to the electrodes 412 and 413, respectively (step S604), and the leads 217 and 218 are connected to the electrode terminals 215 and 216 by the solder layer 219, respectively (step S605). After that, a detecting means (not shown) is connected to the leads 217 and 218 by wiring (not shown). Thereby, the hydrogen sensor shown in FIG. 13 is formed.

Thus, in the method of manufacturing a sensor according to the embodiment, the electrodes 412 and 413 are formed through the method of manufacturing a porous metal film according to the embodiment, so the porosity of the electrodes 412 and 413, the size of the pore, the shape of the pore or the like can be easily controlled. Therefore, the specific surface areas of the electrodes 412 and 413 can be increased, and the contact area with the sensitive film 214 can be increased. Therefore, the hydrogen detecting sensitivity can be improved. Moreover, when an organic powder which decomposes into its monomer form by heat is used, a residue after thermal decomposition can be reduced, so an effect on the reactivity in the sensitive film 214 can be reduced, and higher characteristics can be obtained.

### [Examples]

Specific examples of the invention will be described below.

### (Example 1)

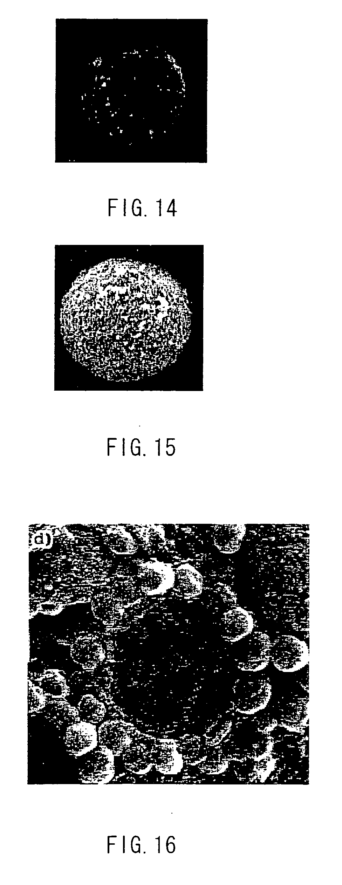

The functional porous film 10 shown in FIG. 1 was formed through the method shown in FIG. 4. At first, a spherical PMMA powder with an average particle diameter of approximately 10 µm was prepared as the pore-forming powder 21, and a indium oxide powder with an average particle diameter of 0.2 µm was prepared as the functional portion material powder 22. Next, the PMMA powder and the indium oxide powder were mixed and compression bonded by a mixing machine (Mechano Fusion (trademark) manufactured by Hosokawa Micron Corporation) so as to deposit the indium oxide powder on the surface of the PMMA powder. FIG. 14 shows a scanning electron microscope (SEM) photograph of a PMMA particle before the indium oxide powder was deposited, and FIG. 15 shows a SEM photograph of the PMMA particle after the indium oxide powder was deposited. As shown in FIGs. 14 and 15, it was confirmed that the indium oxide powder was deposited on the surface of the PMMA powder.

Next, a gold powder with an average particle diameter of approximately 1 µm was prepared as the porous body material powder, and after the gold powder, ethyl cellulose and 2,2,4-trimethyl-1,3-pentanediol monoisobutyrate were mixed to form a mixture, the PMMA powder on which the indium oxide powder was deposited was added to and mixed with the mixture to form slurry. After that, the slurry was applied to a substrate, and was dried. Then, a two-step firing process in which the slurry was kept at 400°C for two hours, and then at 800°C for one hour was performed. Thereby, the functional porous film 10 was obtained.

When the obtained functional porous film 10 was observed by a SEM, it was found out that while a portion where the PMMA particles existed remained, gold particles were connected to form the porous body 11 having a uniform minute spherical pore, and the indium oxide powder was deposited inside the pore. FIG. 16 shows a SEM photograph of the functional porous film 10. In FIG. 16, a plurality of particles connected to form a loop are gold particles, and minute particles deposited on the surfaces of the gold particles are the indium oxide powder.

Moreover, the carbon dioxide sensor shown in FIG. 5 was formed by using the functional porous film 10. At first, the solid electrolyte 130 was made of NASICON, and the functional porous film 10 was formed on the solid electrolyte 130 as described above. Next, a paste formed through mixing indium oxide and a complex carbonate including lithium carbonate and barium carbonate with α-terpineol into which ethyl cellulose was mixed was applied to the functional porous film 10, and was dried. Next, a mixture including the gold powder, ethyl cellulose and 2,2,4-trimethyl-1,3-pentanediol monoisobutyrate was applied to the solid electrolyte 130, and was dried. After that, the paste and the mixture were fired at 600°C for two hours to form the detection layer 111 and the reference layer 121 of the counter electrode 120. Thereby, the carbon dioxide sensor of Example 1 was obtained.

As Comparative Example 1 with respect to Example 1, a carbon dioxide sensor was formed as in the case of Example 1, except that instead of the functional porous film 10, a porous metal film made of gold was used. As in the case of the reference layer 121 of the counter electrode 120, after a mixture including the gold powder, ethyl cellulose and 2,2,4-trimethyl-1,3-pentanediol monoisobutyrate was applied and dried, the mixture was fired so as to form the porous metal film.

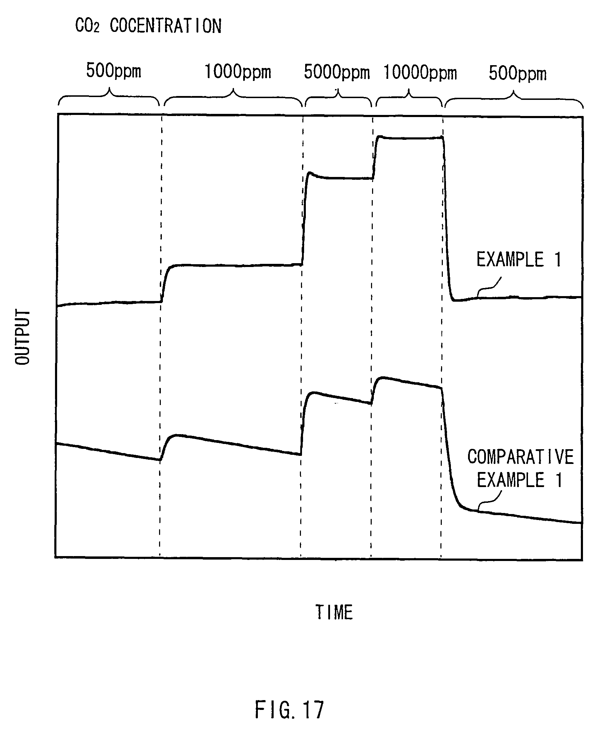

The sensitivity, the response speed and the recovery speed of the carbon dioxide sensors of Example 1 and Comparative Example 1 were determined. The results are shown in Table 1 and FIG. 17. Table 1 shows relative values in the case where the values of Comparative Example 1 are 100%. FIG. 17 shows a change in output when the concentration of carbon dioxide is changed, and it means that the shorter the time elapsed from when the concentration is changed to when the output become uniform is, the faster the response speed is. The values shown in Table 1 are the results shown in FIG. 17 which are expressed numerically.

**[Table 1]**

| | SENSITIVITY | RESPONSE SPEED | RECOVERY SPEED |
|---|---|---|---|
| EXAMPLE1 | 120% | 90% (10% SPEEDUP) | 85% (15% SPEEDUP) |
| COMPARATIVE EXAMPLE 1 | 100% | 100% | 100% |

It was obvious from Table 1 that in Example 1, compared to Comparative Example 1, the sensitivity, the response speed and the recovery speed could be improved. It was considered that the functional portion 12 which functioned as a detecting portion was disposed in the functional porous film 10, so the specific surface area of the detecting portion and the contact area between the detecting portion and the porous body 11 which was a current collector were increased, thereby more highly sensitive detection was possible. Moreover, it was considered that as the porosity of the functional porous film 10 was increased, an atmosphere gas including carbon dioxide which was a detected gas was rapidly dispersed, so higher speed could be obtained. Further, it was found out that in Example 1, compared to Comparative Example 1, a drift confirmed at the beginning of the measurement was reduced, although it was not shown in Table 1.

In other words, it was found out that when the functional porous film 10 in which the functional portion 12 was disposed on the inner wall of the pore 11A was used, the characteristics of the sensor could be improved.

### (Example 2)

The functional porous film 10 shown in FIG. 1 was formed through the method shown in FIG. 2. At first, as in the case of Example 1, the PMMA powder and the indium oxide powder were prepared, and the indium oxide powder was deposited on the surface of the PMMA powder. Next, the PMMA powder on which the indium oxide powder was deposited and a dispersant were mixed into water to form slurry. Then, the slurry was applied to a substrate, and was dried to form the pore-forming film 24. Next, a colloidal solution including a gold powder with an average particle diameter of 20 nm was prepared as the slurry, and the slurry was applied to the pore-forming film 24 so as to impregnate the pore-forming film 24 with the slurry, and the slurry was dried. The application of the slurry was repeated several times to form the precursor film 25, and the gold powder was sufficiently spread in the PMMA powder. After that, a two-step firing process in which the precursor film 25 was kept at 400°C for two hours, and then at 750°C for 1 hour was performed. Thereby, the functional porous film 10 was obtained.

When the functional porous film 10 of Example 2 was observed with the SEM, as in the case of Example 1, gold particles were connected to form the porous body 11 having a uniform minute spherical pore, and indium oxide powder was deposited inside the pore.

Moreover, when the carbon dioxide sensor shown in FIG. 5 was formed by using the functional porous film 10 as in the case of Example 1, it was confirmed that as in the case of Example 1, the sensitivity, the response speed and the recovery speed could be improved.

### (Example 3)

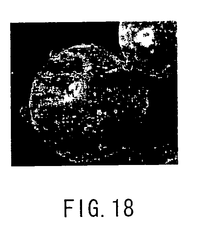

The functional porous film 10 shown in FIG. 1 was formed as in the case of Example 1, except that the method of depositing the functional portion material powder 22 on the pore-forming powder 21 was changed. At first, a spherical PMMA powder with an average particle diameter of approximately 10 µm was prepared as the pore-forming powder 21, and slurry in which an indium oxide powder with an average particle diameter of 20 nm as the material of the functional portion 12 was dispersed was prepared. Next, the slurry of the indium oxide powder was sprayed to the PMMA powder with an injector (Agglomaster (trademark) manufactured by Hosokawa Micron Corporation) to deposit the indium oxide powder on the surface of the PMMA powder. FIG. 18 shows a SEM photograph of a PMMA particle after the indium oxide powder was deposited. As shown in FIG. 18, it was confirmed that the indium oxide powder was deposited on the whole surface of the PMMA powder in film form.

After the gold powder, ethyl cellulose and 2,2,4-trimethyl-1,3-pentanediol monoisobutyrate were mixed to form a mixture, the PMMA powder on which the indium oxide powder was deposited was added to and mixed with the mixture, and the slurry was applied to the substrate, and the slurry was dried, and then was fired to obtain the functional porous film 10. When the obtained functional porous film 10 was observed with the SEM, as in the case of Example 1, gold particles were connected to form the porous body 11 having a uniform minute spherical pore, and the indium oxide powder was deposited inside the pore.

Moreover, when the carbon dioxide sensor shown in FIG. 5 was formed by using the functional porous film 10 as in the case of Example 1, it was confirmed that as in the case of Example 1, the sensitivity, the response speed and the recovery speed could be improved.

### (Example 4)

As in the case of Example 3, slurry in which the PMMA powder and the indium oxide powder were dispersed was prepared, and the indium oxide powder was deposited on the surface of the PMMA powder. Then, as in the case of Example 2, the functional porous film 10 was formed. More specifically, the PMMA powder on which the indium oxide powder was deposited and a dispersant were mixed into water to form slurry, and after the slurry was applied to the substrate, and was dried, the substrate was impregnated with a colloidal solution including gold powder, and then a firing process was performed. When the obtained functional porous film 10 was observed with the SEM, as in the case of Example 1, gold particles were connected to form the porous body 11 having a uniform minute spherical pore, and indium oxide powder was deposited inside.

Moreover, when the carbon dioxide sensor shown in FIG. 5 was formed by using the functional porous film 10 as in the case of Example 1, it was confirmed that as in the case of Example 1, the sensitivity, the response speed and the recovery speed could be improved.

### (Example 5)

A porous metal film was formed through the method of manufacturing a porous metal film shown in FIG. 9. At first, a spherical PMMA powder with an average particle diameter of approximately 10 µm was prepared as the organic powder, and a gold powder with an average particle diameter of approximately 1 µm was prepared as the metal material powder. Next, after the gold powder, ethyl cellulose and 2,2,4-trimethyl-1,3-pentanediol monoisobutyrate were mixed to form a mixture, the PMMA powder was added to and mixed with the mixture to obtain slurry. Then, after the slurry was applied to a substrate and was dried, a two-step firing process in which the substrate was kept at 400°C for two hours, and then at 800°C for 1 hour was performed. Thereby, a porous metal film made of gold was obtained.

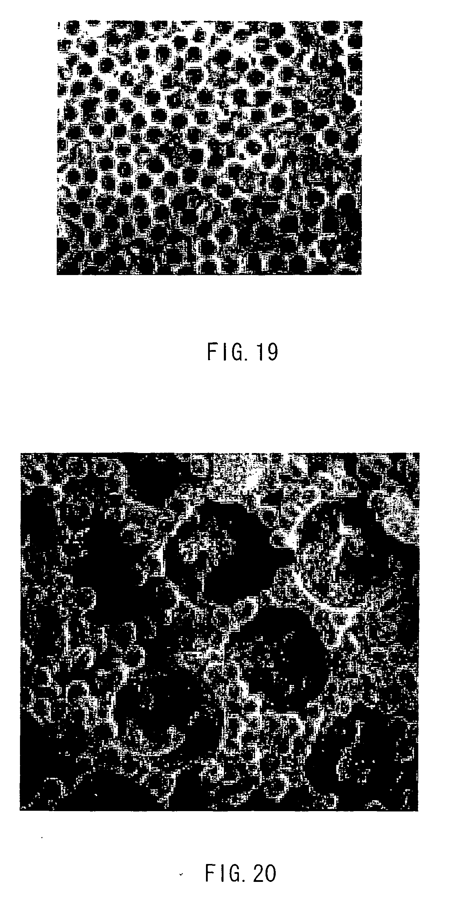

When the obtained porous metal film was observed with the SEM, it was found out that while a portion where the PMMA particles existed remained, gold particles were connected to form a porous metal film having a uniform minute spherical pore. FIGs. 19 and 20 show the SEM photographs of the porous metal film. FIG. 20 is a partially enlarged view of the SEM photograph shown in FIG. 19.

Moreover, when the surface resistance of the obtained porous metal film was measured by the DC four-terminal method, the obtained value was 1×10⁻⁴ Ω·cm to 1 × 10⁻⁵ Ω·cm.

As Comparative Example 5 with respect to Example 5, a porous metal film was formed as in the case of Example 5, except that the spherical PMMA powder was not added. It was a conventional method used to form an electrode for a sensor or the like. When the surface resistance of the porous metal film of Comparative Example 1 was measured by the DC four-terminal method, the obtained value was 1 × 10⁻⁵ Ω·cm. In other words, it was found out that in Example 5, a porous metal film which was sufficiently effective as an electrode equivalent to an electrode made of a conventional porous metal film could be obtained.

### (Examples 6-1 and 6-2)

The carbon dioxide sensor shown in FIG. 11 was formed by using the porous metal film of Example 5 as Example 6-1. In Example 6-1, the current collector 321 of the detection electrode 320 was formed as in the case of Example 5. The solid electrolyte 310 was made of NASICON, and the detection layer 322 was formed through the following steps. A paste formed through mixing indium oxide and a complex carbonate including lithium carbonate and barium carbonate into α-terpineol into which ethyl cellulose was mixed was applied to a substrate, and was dried, and then the paste was fired at 600°C for two hours to form the detection layer 322. The reference layer 331 of the counter electrode 330 was formed as in the case of Comparative Example 5, and the cap layer 332 was not formed. Moreover, as Example 6-2, the carbon dioxide sensor was formed as in the case of Example 6-1, except that the current collector 321 of the detection electrode 320 and the reference electrode 331 of the counter electrode 330 were formed as in the case of Example 5.

As Comparative Example 6-1 with respect to Examples 6-1 and 6-2, the carbon dioxide sensor was formed as in the case of Examples 6-1 and 6-2, except that the current collector 321 of the detection electrode 320 and the reference electrode 331 of the counter electrode 330 were formed as in the case of Comparative Example 5.

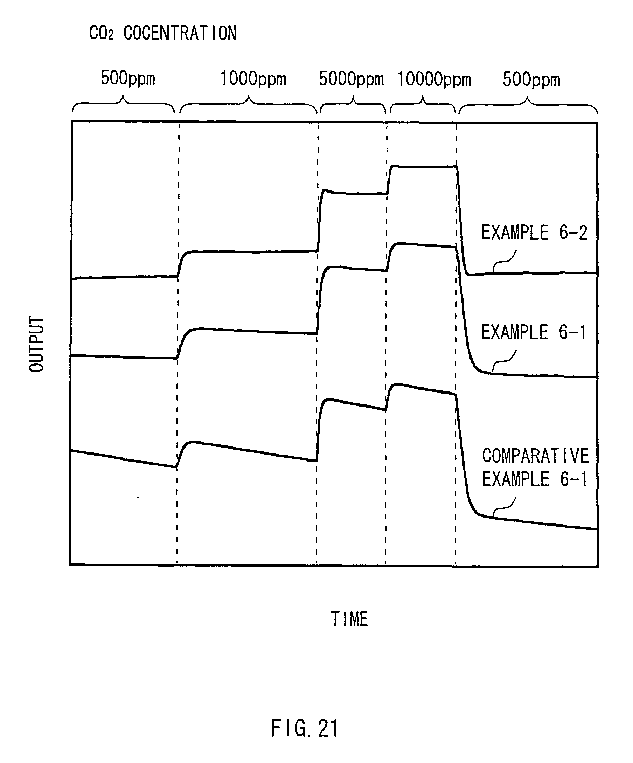

The sensitivity, the response speed and the recovery speed of the carbon dioxide sensors of Examples 6-1 and 6-2 and Comparative Example 6-1 were determined. The results are shown in Table 2 and FIG. 21. Table 2 shows relative values in the case where the values of Comparative Example 6-1 are 100%. FIG. 21 shows a change in output when the concentration of carbon dioxide is changed, and it means that the shorter the time elapsed from when the concentration is changed to when the output become uniform is, the faster the response speed is. The values shown in Table 2 are the results shown in FIG. 21 which are expressed numerically.

**[Table 2]**

| | SENSITIVITY | RESPONSE SPEED | RECOVERY SPEED |
|---|---|---|---|
| EXAMPLE 6-1 | 100% | 90% (10% SPPEDUP) | 85% (15% SPPEDUP) |
| EXAMPLE 6-2 | 100% | 80% (20% SPEEDUP) | 76% (24% SPEEDUP) |
| COMPARATIVE EXAMPLE 6-1 | 100% | 100% | 100% |

It was obvious from Table 2 and FIG. 21 that in Examples 6-1 and 6-2, compared to Comparative Example 1, the sensitivity, the response speed and the recovery speed could be improved. Moreover, no decline in sensitivity was observed. It was considered that as the porosity of the porous metal film was increased, or the uniformity of the size and the shape of the pore was improved, an atmosphere gas including carbon dioxide which was a detected gas was rapidly dispersed, thereby an effect for speedup was exerted. Moreover, it was found out that in Examples 6-1 and 6-2, compared to Comparative Example 6-1, a drift confirmed at the beginning of the measurement was reduced, although it was not shown in Table 2.

In other words, it was found out that when the porous metal film was formed through heating the precursor film 32 including the organic powder and the material powder, the porosity, the size of the pore, the shape of the pore or the like could be controlled, and the characteristics of the sensor could be improved.

### (Example 7)

A porous metal film was formed through the method of manufacturing a porous metal film shown in FIG. 7. At first, a spherical PMMA powder with an average particle diameter of 0.8 µm was prepared as the organic powder, and the PMMA powder and a dispersant was mixed into water to form slurry. Next, the slurry was applied to a substrate, and was dried, thereby the pore-forming film 32A was formed. Then, a colloidal solution including a gold powder with an average particle diameter of 20 nm was prepared as the slurry, and the colloidal solution was applied to the pore-forming film 32A so as to impregnate the pore-forming film 32A with the colloidal solution, and the colloidal solution was dried. The application of the slurry was repeated several times to form the precursor film 32, and the gold powder was sufficiently spread in the PMMA powder. After that, a two-step firing process in which the precursor film 32 was kept at 400°C for two hours, and then at 750°C for one hour was performed. Thereby, the porous metal film made of gold was obtained.

When the obtained porous metal film of Example 7 was observed with the SEM, it was found out that while a portion where the PMMA particles existed remained, gold particles were connected to form a porous metal film having a uniform minute spherical pore as in the case of Example 5.

Moreover, when the surface resistance of the porous metal film of Example 7 was measured by the DC four-terminal method, the obtained value was 5 × 10⁻⁴ Ω·cm. In other words, it was found out that in Example 7, a porous metal film sufficiently effective as an electrode could be obtained.

### (Examples 8-1 and 8-2)

Carbon dioxide sensors were formed by using the porous metal film of Example 7 as in the case of Examples 6-1 and 6-2. The carbon dioxide sensors were formed as in the case of Examples 6-1 and 6-2, except that in Example 8-1, the current collector 321 of detection electrode 320 was formed as in the case of Example 7, and in Example 8-2, the current collector 321 of the detection electrode 320 and the reference electrode 331 of the counter electrode 330 were formed as in the case of Example 5. When the sensitivity, the response speed and the recovery speed of the carbon dioxide sensors of Examples 8-1 and 8-2 were determined, the same results as those in Table 2 were obtained.

In other words, it was found out that even if the precursor film 32 was formed through forming the pore-forming film 32A including the organic powder and then applying the slurry to the pore-forming film 32A as in the case of Examples 7, 8-1 and 8-2, or even if the precursor film 32 was formed through applying the slurry including the organic powder and the material powder as in the case of Examples 5, 6-1 and 6-2, the same effects could be obtained.

Although the invention is described referring to the embodiments and the examples, the invention is not limited to them, and can be variously modified. For example, in the above embodiments and the above examples, the structure of the sensor and the method of manufacturing the sensor are described in detail referring to examples, the invention can be applied to a sensor with any other structure in a like manner.

Moreover, in the embodiments and the examples, the carbon dioxide sensor and the hydrogen sensor are specifically described; however, the invention can be applied to any other sensor such as a carbon monoxide sensor, a nitrogen oxide (NOₓ) sensor, a humidity sensor, a pH sensor or an ion sensor in a like manner.

Obviously many modifications and variations of the present invention are possible in the light of the above teachings. It is therefore to be understood that within the scope of the appended claims the invention may be practiced otherwise than as specifically described.

## Claims

1. A functional porous film, comprising:
a porous body having a pore; and
a functional portion being disposed in the pore and having a different function from the porous body.

2. A functional porous film according to claim 1, wherein
the porous body has a structure in which a plurality of particles are connected to one another.

3. A functional porous film according to claim 1, wherein
the functional portion is dispersed in particle form.

4. A sensor, comprising:
a functional porous film comprising a functional portion being disposed in a pore of a porous body and having a different function from the porous body.

5. A sensor according to claim 4, wherein
the porous body has a structure in which a plurality of particles are connected to one another.

6. A sensor according to claim 4, wherein
the functional portion is dispersed in particle form.

7. A method of manufacturing a functional porous film, comprising the steps of:
forming a precursor film including a pore-forming powder on which a material of a functional portion is deposited and a material powder of a porous body; and
forming a porous body through heating the precursor film to remove the pore-forming powder and sinter the material powder of the porous body, and forming the functional portion in a pore of the porous body.

8. A method of manufacturing a functional porous film according to claim 7, wherein
after a pore-forming film including the pore-forming powder on which the material of the functional portion is deposited is formed, the pore-forming film is impregnated with slurry including the material powder of the porous body so as to form the precursor film.

9. A method of manufacturing a functional porous film according to claim 7, wherein
slurry including the pore-forming powder on which the material of the functional portion is deposited and the material powder of the porous body is applied to form the precursor film.

10. A method of manufacturing a functional porous film according to claim 7, wherein
as the pore-forming powder, an organic powder is used.

11. A method of manufacturing a functional porous film according to claim 7, wherein
a spherical pore-forming powder is used.

12. A method of manufacturing a functional porous film according to claim 7, wherein
the average particle diameter of the pore-forming powder is within a range from 10 times to 10000 times larger than the average particle diameter of the material powder of the porous body.

13. A method of manufacturing a functional porous film according to claim 7, wherein
as the pore-forming powder, a resin powder which decomposes into its monomer form by heat is used.

14. A method of manufacturing a functional porous film according to claim 7, further comprising the step of:
sintering the material powder of the porous body at a temperature equal to or higher than the thermal decomposition temperature of the pore-forming powder and equal to or less than the melting point of the material powder of the porous body.

15. A method of manufacturing a functional porous film according to claim 7, further comprising the step of:
heating the material powder of the porous body while changing the temperature from low to high within a range from the thermal decomposition temperature of the pore-forming powder to the melting point of the porous body material powder of the porous body so as to sinter the material powder of the porous body.

16. A method of manufacturing a porous metal film, comprising the steps of:
forming a precursor film including an organic powder and at least one kind of material powder selected from the group consisting of metal powders and metal precursor powders which are converted into metals by heating; and
heating the precursor film to remove the organic powder and sinter the material powder.

17. A method of manufacturing a porous metal film according to claim 16, wherein
a spherical organic powder is used.

18. A method of manufacturing a porous metal film according to claim 16, wherein
the average particle diameter of the organic powder is within a range from 10 times to 10000 times larger than the average particle diameter of the material powder.

19. A method of manufacturing a porous metal film according to claim 16, wherein
after a pore-forming film including the organic powder is formed, the pore-forming film is impregnated with slurry including the material powder to form the precursor film.

20. A method of manufacturing a porous metal film according to claim 16, wherein
slurry including the organic powder and the material powder is applied to form the precursor film.

21. A method of manufacturing a porous metal film according to claim 16, wherein
as the organic powder, a resin powder which decomposes into its monomer form by heat is used.

22. A method of manufacturing a porous metal film according to claim 16, further comprising the step of:
sintering the material powder at a temperature equal to or higher than the thermal decomposition temperature of the organic powder and equal to or lower than the melting point of the material powder.

23. A method of manufacturing a porous metal film according to claim 16, further comprising the step of:
heating the material powder while changing the temperature from low to high within a range from the thermal decomposition temperature of the organic powder to the melting point of the material powder so as to sinter the material powder.

24. A method of manufacturing a sensor, comprising the steps of:
forming a precursor film including an organic powder and at least one kind of material powder selected from the group consisting of metal powders and metal precursor powders which are converted into metals by heating; and
heating the precursor film to remove the organic powder and sinter the material powder, thereby forming a porous metal film.

25. A method of manufacturing a sensor according to claim 24, wherein
a spherical organic powder is used.

26. A method of manufacturing a sensor according to claim 24, wherein
after a pore-forming film including the organic powder is formed, the pore-forming film is impregnated with slurry including the material powder to form the precursor film.

27. A method of manufacturing a sensor according to claim 24, wherein
slurry including the organic powder and the material powder is applied to form the precursor film.

28. A method of manufacturing a sensor according to claim 24, wherein
as the organic powder, a resin powder which decomposes into its monomer form by heat is used.
